# EUROPEAN PATENT APPLICATION

(11) **EP 3 564 656 A1**
(43) Date of publication of application: **06.11.2019**
(21) Application number: 17886405.4
(22) Date of filing: 28.12.2017
(51) Int. Cl.: G01N 21/78

(54) **PORTABLE DEVICE FOR MEASURING PHOTOCATALYTIC ACTIVITY AND METHOD FOR MEASURING PHOTOCATALYTIC ACTIVITY**

(30) Priority: 30.12.2016 ES 201631716
(71) Applicant: Consejo Superior De Investigaciones Científicas (CSIC), 28006 Madrid (ES)
(72) Inventor: JIMENEZ RELINQUE, Eva, 28033 Madrid (ES); CASTELLOTE ARMERO, Marta, 28033 Madrid (ES)
(74) Representative: Pons Ariño, Angel
(86) International application number: PCT/ES2017/070861
(87) International publication number: WO 2018/122437

(57) **Abstract**

The present invention relates to a portable device for measuring photocatalytic activity, for application thereof to agents with photocatalytic properties, that evaluates photodegradation using coloured organic and inorganic indicators, in contact with the agent, activating the photocatalytic process using a controlled illumination system, whereby the portable device for measuring photocatalytic activity comprises an integrated system with colour measurement detectors and an illumination system adapted for use in different situations. The invention also relates to a method for measuring photocatalytic activity carried out using the aforementioned device.

## Description

### OBJECT OF THE INVENTION

The present invention relates to a portable device for measuring photocatalytic activity, for application thereof to agents with photocatalytic properties, that evaluates the photodegradation using coloured organic and inorganic indicators, in contact with the agent, activating the photocatalytic process with a controlled illumination system.

The object of the present invention is a portable device for measuring photocatalytic activity comprising an integrated system with colour measurement detectors and an illumination system adapted for use in different situations. Another object of the invention is a method for measuring photocatalytic activity.

### BACKGROUND OF THE INVENTION

Photocatalytic activity indicator dyes are preferably organic colourants which, when in contact with a photocatalytic agent, exhibit a change or the disappearance of their colour due to the fact that they react with the active species formed on the surface of the photocatalyst during the activation process of the same with ultraviolet or visible radiation. The monitoring of this chromatic evolution enables the presence of a heterogeneous photocatalyst to be identified and its activity measured. Two of the dyes most commonly used for this purpose are rhodamine B (RhB) for its reduction in the intensity of the coordinate a* (pink) and resazurin (Rz) which exhibits a change in colour from blue to pink.

To this end, chromatic models are used such as CIE L*a*b* (CIELAB) or RGB to be able to view the measurements carried out.
The model CIE L*a*b* (CIELAB) is the chromatic model normally used to plot all the colours that the human eye can perceive. The axis *L is lightness and goes from 0 (black) to 100 (white). The other two coordinate axes are a* and b* and represent a variation between reddish-greenish and yellowish-bluish, respectively. The cases in which a* = b* = 0 are achromatic, this is why the axis *L represents the achromatic grey scale which goes from white to black.

The RGB method is a chromatic model based on the decomposition of the colour in the three primary colours: red, green and blue (R = red, G = green, B = blue, hence the name of the method). The different RGB methods for defining colours are based on the quantity or intensity that a determined colour has of each one of the primary colours.

Defining a colour in RGB is therefore defining the mixture quantity of the three primary colours which is required to achieve this colour. Therefore, a colour defined in RGB will always have three numbers defining it. The first will correspond to the red colour, the second to the green and the third to the blue. The RGB decimal, the most general representation scale, uses a scale for each number going from 0 to 255, 0 being the absence of colour and 255 the maximum colour.

Devices for measuring photocatalytic activity of solid materials by means of the coupling of different measurement systems to a designed irradiation system are known in the state of the art.

Among the previous devices is the one described in international application WO2006077169 relating to a device for measuring photocatalytic activity of a photoactivated material with a radiation source which includes a measuring probe with a measuring head, where, during the measurement, the head reacts upon being positioned at a certain distance from the material to be measured by means of an indicator dye.

However, the previous devices can give rise to false negatives or underestimated measurements of the photocatalytic activity of the material because it is only capable of evaluating the effect of the active species with a sufficiently long useful life so as to be transferred from the activated surface to the detection probe or indicator dye.

The portable device for measuring photocatalytic activity of the present invention has a configuration allowing all the previous drawbacks to be solved, providing a device allowing the use thereof in different situations without depending on the composition of the substance or material to be analysed.

### DESCRIPTION OF THE INVENTION

The present invention relates to a portable device for measuring photocatalytic activity, for application thereof to agents with photocatalytic properties, that evaluates photodegradation using coloured organic and inorganic indicators, in contact with the agent, activating the photocatalytic process with a controlled illumination system.

The portable device for measuring photocatalytic activity comprises a control unit connected to a detector comprising colour sensors which detect the light reflected by an indicator dye in contact with the agent with photocatalytic properties, where the detector is configured for being in direct contact with the agent with photocatalytic properties.

The portable device for measuring photocatalytic activity further comprises an illumination system of the agent with photocatalytic properties, preferably with selectable intensity level, preferably UV, visible or IR.

The device further comprises viewing means where the operator can view the measurements carried out, preferably in RGB or CIELAB mode.

The portable device for measuring photocatalytic activity of the present invention is capable of distinguishing the levels of photocatalytic activity as a function of the colour changes of the organic/inorganic substances in contact with any photocatalytic agent in solid or liquid state or in suspension. The device can be configured for the continuous sampling of activated photocatalytic agents, suitable for the use thereof in the laboratory by means of preferably a USB connection or by means of a battery at ground level, where, in the latter case, it can store the measurements carried out in an internal memory.

Thus configured, the portable device for measuring photocatalytic activity allows the following to be carried out:
1) simple measurements of the colour of the indicator dye in contact with the photocatalytic agent using white light, carrying out the measurements continuously which can be stored in the internal memory, and
2) monitoring the evolution of the colour of the indicator dye in contact with the photocatalytic agent activating UV or visible light according to the type of photodegradation desired.

In this way, the portable device for measuring photocatalytic activity thus configured has the following advantages:
- it is fully automated, integrated by an electronic measurement system coupled to an illumination system which allows an immediate reading of the photoactivity of a photocatalytic agent,
- it enables agents in solid or liquid state or in suspension to be measured,
- it enables flexible use to be made of a provided radiation source, whether it is UV or VIS radiation, maximum wavelength and adjustable radiation intensity,
- it enables the measurement to be carried out in the laboratory or in-situ.

The invention also relates to a method for measuring photocatalytic activity by means of the portable measurement device described above which comprises:
- a step for placing the detector into direct contact with the agent with photocatalytic properties, and
- a step for measuring the photocatalytic activity based on the colour variation of the indicator probe.

The device determines the colour variation of the probe due to the photocatalytic degradation process as a function of the degradation percentage of the probe during the photoactivation of the photocatalytic material (square root of the squares of the differences between the measured signals L, a and b and those of the initial cycle), time constant in seconds, colour coordinates, L*, a* and b*, (labtau(s) and abtau(s)) and time in seconds in which the probe is degraded by 90% considering the colour coordinates L*, a* and b* (Lab90% and ab90%), tau(s) being the unit of time for defining an exponential process as is the case of the change in colour of an indicator probe during photoactivation.

With the measurement method thus defined, the false negatives or underestimated measurements of the photocatalytic activity of the material are avoided because it enables carrying out complete detection of the active species formed on the surface of the photocatalyst which are responsible for the photoactivity of the same independently of their useful life or their possibility of diffusing in the air. In this way, the reproducibility and precision of the measurements is also ensured. It also allows surface parameters of the photocatalytic agent which directly affect the resulting photoactivity (roughness, porosity) to be evaluated.

In addition, when a measurement step by direct contact is carried out, it is possible to determine species that are diffused in the air.

### BRIEF DESCRIPTION OF THE DRAWINGS

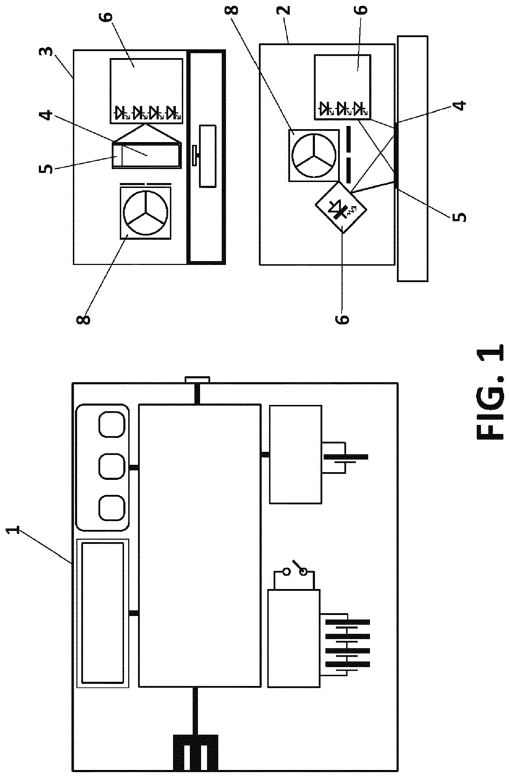

Figure 1 shows a block diagram of the portable device for measuring photocatalytic activity according to the present invention.

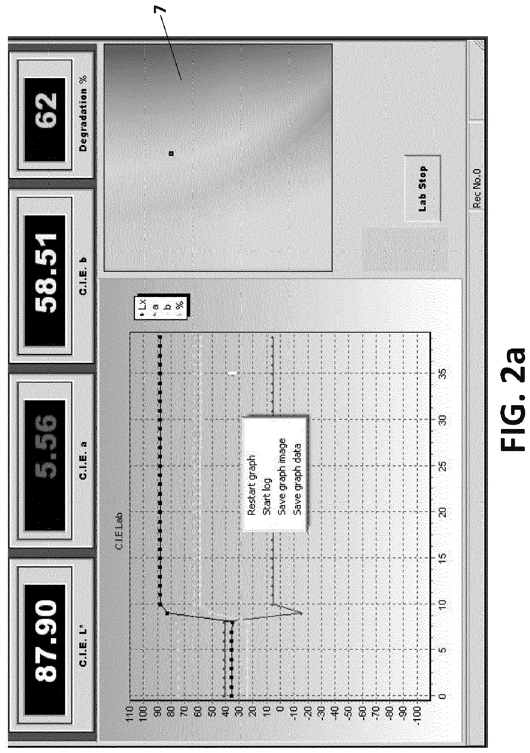

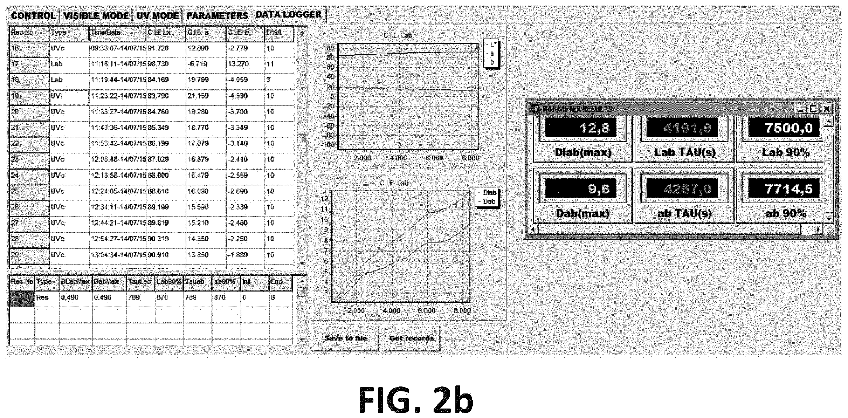

Figure 2a and 2b show an example of the results obtained of the colour variation of an indicator probe by means of photoactivation of a photocatalytic material, where Figure 2a) shows an example of results of the colour coordinate values L* ,a* and b* (CIEL*, CIEa* and CIEb*) and calculation of the degradation percentage of the probe during the photoactivation of the photocatalytic material (square root of the squares of the differences between the actual signals L, a and b and those of the initial cycle) and Figure 2b) shows values of the colour variation or distance (square root of the squares of the differences between the actual signals L, a and b and those of the initial cycle). Dlabmax: maximum distance colour coordinates L* ,a* and b*; Dabmax: maximum distance colour coordinates a* and b*; Labtau(s) : time constant in seconds colour coordinates L* ,a* and b*; abtau(s) : time constant in seconds colour coordinates a* and b*; Lab90% time in seconds in which the probe is degraded by 90% considering the colour coordinates L* ,a* and b*; ab90% time in seconds in which the probe is degraded by 90% considering the colour coordinates a* and b*;

### PREFERRED EMBODIMENT OF THE INVENTION

The portable device for measuring photocatalytic activity of the present invention is described below in detail.

The portable device for measuring photocatalytic activity comprises a control unit (1) connected to a detector (2, 3) comprising colour sensors (8), preferably for the components red (R), green (G) and blue (B) of the light reflected by an indicator dye (4) in contact with an agent with photocatalytic properties (5), where the detector (2, 3) is configured for being in direct contact with the agent with photocatalytic properties (5).

In this exemplary embodiment, the detector can be a detector for solid agents (2) or a detector for liquid agents or agents in suspension (3) arranged on a tray.

The device comprises an illumination system (6), preferably ultraviolet (UV) or visible (VIS), with selectable levels, where the detector (2, 3) enables measurements of photocatalytic activity to be carried out on solids or liquids/suspensions.

The illumination system preferably comprises various light emitters for the measurements in liquid agents or agents in suspension, or solid agents, respectively.

The UV light used can correspond to any wavelength, preferably 365 nm and the irradiation intensity thereof can be modified from 0 to 30 W/m². The visible illumination used has a wavelength from 400 nm to 700 nm and enables the output levels of each component (red, green, blue) to be selected, as well as the generation of white light required for correctly measuring the colour.

The device further comprises viewing means where the operator can view the measurements carried out, preferably in RGB or CIELAB mode. These viewing means (7) are an LCD screen.

In the case where the detector is a detector for solid agents (2), the method for measuring photocatalytic activity by means of the portable measurement device comprises the following steps:
- a step for connecting the detector for solid agents (2) to a control unit (1),
- a step for placing the detector for solid agents (2) into direct contact with the agent with photocatalytic properties (5) based on the colour variation of the indicator probe,
- a step for measuring the photocatalytic activity.

In the case where the detector is a detector for liquid agents or agents in suspension (3), the measurement device further comprises a magnetic stirrer and a bar magnet, where the method for measuring photocatalytic activity by means of the portable measurement device comprises the following steps:
- a step for placing the dye (4) into contact with the agent with photocatalytic properties (5) arranged on a tray based on the colour variation of the indicator probe,
- a step for connecting the detector for liquid agents (3) to the control unit (1),
- a step for placing the detector for liquid agents (3) into direct contact with the agent with photocatalytic properties (5),
- a step for arranging the detector for liquid agents or agents in suspension (3) on the magnetic stirrer,
- a step for introducing the bar magnet in the measuring tray,
- a step for activating the magnetic stirrer,
- a step for measuring the photocatalytic activity.

## Claims

1. A portable device for measuring photocatalytic activity comprising a control unit (1) connected to a detector (2, 3) which in turn comprises colour sensors (8) which detect the light reflected by an indicator dye (4) in contact with an agent with photocatalytic properties (5), **characterised in that** the detector (2, 3) is configured for being in direct contact with the agent with photocatalytic properties (5).

2. The portable device for measuring photocatalytic activity according to claim 1, **characterised in that** it comprises an illumination system (6) with selectable levels.

3. The portable device for measuring photocatalytic activity according to claim 2, **characterised in that** the illumination system (6) is UV, has a variable wavelength and an irradiation intensity modifiable from 0 to 30 W/m².

4. The portable device for measuring photocatalytic activity according to claim 2, **characterised in that** the illumination system (6) is visible, has a wavelength from 400 nm to 700 nm and enables the output levels of each component to be selected, as well as the generation of white light required for correctly measuring the colour.

5. The portable device for measuring photocatalytic activity according to claim 2, **characterised in that** the illumination system (6) is IR.

6. The portable device for measuring photocatalytic activity according to any of the preceding claims, **characterised in that** it comprises viewing means (7) of the measurements carried out.

7. The portable device for measuring photocatalytic activity according to claim 6, **characterised in that** the viewing means (7) are an LCD screen.

8. The portable device for measuring photocatalytic activity according to any of the preceding claims, **characterised in that** the detector is a detector for solid agents (2).

9. The portable device for measuring photocatalytic activity according to any of the preceding claims, **characterised in that** the detector is a detector for liquid agents or agents in suspension (3).

10. The portable device for measuring photocatalytic activity according to claim 9, **characterised in that** it further comprises a magnetic stirrer and a bar magnet.

11. A method for measuring photocatalytic activity by means of the portable measurement device of any of the preceding claims, **characterised in that** it comprises:
- a step for placing the detector (2, 3) into direct contact with the agent with photocatalytic properties (5), and
- a step for measuring the photocatalytic activity based on the colour variation of the indicator probe.

12. The method for measuring photocatalytic activity by means of the portable measurement device according to claim 8, **characterised in that** it further comprises:
- a step for connecting the detector for solid agents (2) to the control unit (1) prior to the step for placing the detector (2) into direct contact with the agent with photocatalytic properties (5) based on the colour variation of the indicator probe.

13. The method for measuring photocatalytic activity by means of the portable measurement device according to claim 10, **characterised in that** it further comprises:
- a step for placing the dye (4) into contact with the agent with photocatalytic properties (5) arranged on a tray, and
- a step for connecting the detector for liquid agents or agents in suspension (3) to the control unit (1) prior to the step for placing the detector for liquid agents or agents in suspension (3) into direct contact with the agent with photocatalytic properties (5), and
- a step for arranging the detector for liquid agents or agents in suspension (3) on the magnetic stirrer,
- a step for introducing the bar magnet into the measuring tray,
- a step for activating the magnetic stirrer,
- a step for measuring the photocatalytic activity,
after the step for placing the detector for liquid agents or agents in suspension (3) into direct contact with the agent with photocatalytic properties (5).
